# FASCICULE DE BREVET EUROPEEN

(11) **EP 0 438 000 B1**
(45) Date de publication et mention de la délivrance du brevet: **16.06.1993**
(21) Numéro de dépôt: 90403747.0
(22) Date de dépôt: 21.12.1990
(51) Int. Cl.: B60R 5/04

(54) **Dispositif de cloisonnement de l'habitacle d'un véhicule à hayon**
Trennvorrichtung für den Fahrgastraum eines Fahrzeugs mit Heckklappe
Partitioning device for the passenger compartment of a hatchback vehicle

(30) Priorité: 16.01.1990 FR 9000448
(43) Date de publication de la demande: 24.07.1991
(73) Titulaire: AUTOMOBILES PEUGEOT, 75116 Paris (FR); AUTOMOBILES CITROEN, 92200 Neuilly-sur-Seine (FR)
(72) Inventeur: Lalanne, André, F-93200 Saint Denis (FR)
(74) Mandataire: Durand, Yves Armand Louis

(56) Documents cités:
- FR-A- 2 036 228
- FR-A- 2 452 571
- GB-A- 2 206 548

## Description

La présente invention a pour objet un dispositif de cloisonnement et plus particulièrement un dispositif de séparation de l'habitacle d'un véhicule à hayon en au moins deux parties.

On a proposé depuis longtemps des dispositifs de séparation de l'habitacle d'un véhicule à hayon en deux parties à l'aide d'une cloison transversale coulissant horizontalement et disposée au-dessus du siège arrière.

Toutefois, ces dispositifs ne peuvent pas s'escamoter lorsqu'on souhaite rabattre le siège arrière afin de disposer d'un espace agrandi de chargement dans le coffre.

Aussi, pour remédier à cet inconvénient, on a proposé de réaliser des dispositifs comportant une cloison transversale et escamotable, montée coulissante verticalement entre au moins deux organes de guidage solidaires du siège arrière du véhicule (voir préambule de la revendication 1).

Cependant, de tels dispositifs ne permettent pas de séparer de façon étanche l'habitacle en deux parties et en conséquence, ne protègent pas efficacement les occupants du véhicule des conditions extérieures telles que le froid et les courants d'air.

Aussi, la présente invention a pour but de résoudre ces problèmes en proposant un dispositif de cloisonnement qui présente des qualités remarquables d'étanchéité et qui, en outre, permet d'actionner à distance un écran solaire.

A cet effet, la présente invention a pour objet un dispositif de séparation de l'habitacle d'un véhicule à hayon en au moins deux parties, à l'aide d'une cloison transversale et escamotable montée entre au moins deux organes de guidage solidaires du siège arrière du véhicule, caractérisé en ce que ledit siège arrière est équipé latéralement de rampes ou analogues comportant chacune une portion rectiligne et une portion curviligne permettant respectivement la translation de la cloison suivant son plan, puis le basculement de cette cloison vers l'avant de l'habitacle du véhicule pour ainsi ratrapper le joint d'étanchéité supérieur du hayon et s'appliquer de façon étanche contre ce joint.

Suivant une autre caractéristique de ce dispositif, les bords latéraux de la cloison coopèrent de façon étanche avec des éléments de garnissage de l'habitacle, tels que par exemple des parois transparentes et sensiblement parallèles aux vitres latérales arrière de cet habitacle.

On précisera encore ici que le bord supérieur de la cloison coopérant de façon étanche avec le joint d'étanchéité supérieur du hayon est muni d'un doigt ou analogue, actionnable par un électro-aimant et susceptible de coopérer avec un anneau arrimé à un écran solaire rétractable.

Suivant encore une autre caractéristique de l'invention, l'écran solaire précité est enroulable sur un tambour ou analogue, situé tout comme les deux organes de guidage précités en partie extrême haute du dossier du siège arrière.

Le dispositif suivant cette invention est encore caractérisé en ce que les organes de guidage précités forment au moins une paire de galets montés sur des supports réglables respectivement dans deux plans sensiblement orthogonaux.

Mais d'autres avantages et caractéristiques de l'invention apparaîtront mieux dans la description détaillée qui suit et se réfère aux dessins annexés donnés uniquement à titre d'exemple, et dans lesquels :
La figure 1 est une vue en coupe d'un dispositif de cloisonnement suivant l'invention dans lequel la cloison escamotable est représentée à différentes positions ;
La figure 2 est une vue écorchée et en perspective de l'arrière d'un dispositif suivant l'invention avec un système d'entraînement de la cloison escamotable représenté de façon schématique.
La figure 3 est une vue en coupe du système d'arrimage automatique d'un écran solaire à la cloison.

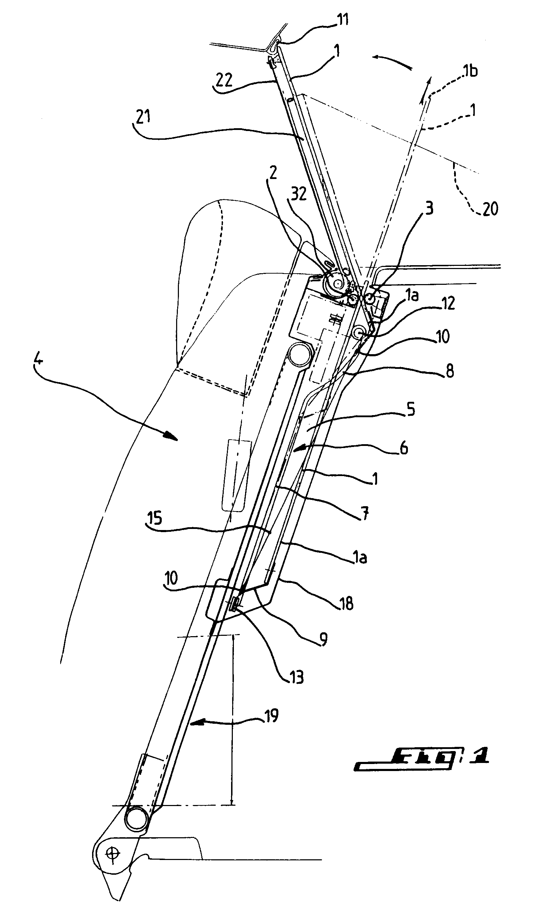

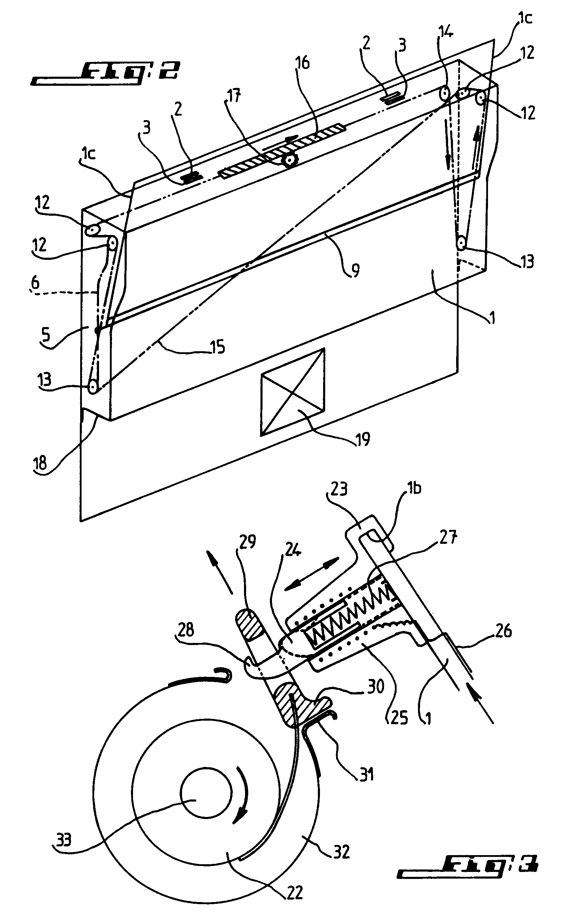

En se reportant aux figures 1 à 3 et selon un exemple de réalisation, on voit qu'un dispositif de séparation conforme à cette invention comprend une cloison transversale 1 en matériau translucide, tel que par exemple verre, montée entre deux paires d'organes de guidages formant galets 2, 3, solidaires du dossier du siège arrière 4 d'un véhicule à hayon.

Le siège arrière 4 comporte, fixée à chacun de ses rebords latéraux, une paroi 5 dans laquelle est formée longitudinalement une rampe de guidage 6 de la cloison 1. Ladite rampe comporte une portion inférieure rectiligne 7, sensiblement parallèle au dossier du siège 4, et une portion supérieure curviligne 8, prolongeant la portion rectiligne 7 à distance croissante du dossier du siège 4.

La cloison 1 comporte une équerre 9, fixée à sa partie inférieure 1a à l'aide de vis (non représentées). A chaque extrémité latérale de l'équerre 9, un pion de guidage 10 fait saillie de l'ensemble formé par la cloison 1 et l'équerre 9 de façon à coopérer avec les rampes 6. On comprend donc déjà que le pion 10 est guidé dans les portions successives 7 et 8 de la rampe 6 et fait subir à la cloison 1 une translation et un basculement permettant à la partie supérieure 1b de cette cloison de venir s'appliquer de façon étanche (comme on le voit bien sur la figure 1) contre le joint d'étanchéité supérieur 11 du hayon (non représenté) du véhicule.

Un système d'entraînement de la cloison 1 est illustré schématiquement sur la figure 2. Ce système est constitué par des poulies à gorge 12, 13 coopérant avec un câble 15 sur lequel est fixée une crémaillère 16 entraînée par un motoréducteur 17. On a répéré en 14 une poulie à gorge de renvoi du câble 15.

Une paire de poulies supérieures 12 et une poulie inférieure 13 sont montées sur chaque paroi 5 de manière qu'un tronçon du câble 15, compris entre l'une des poulies 12 et la poulie 13, s'étende parallèlement à chaque rebord latéral 1c de la cloison 1. L'équerre 9, solidaire de la partie inférieure 1a de la cloison, est fixée à chacune de ses extrémités latérales sur ces tronçons du câble 15 de façon à être entraînée par celui-ci.

Suivant le mode de réalisation illustré sur les figures 1 et 2, la cloison 1, les galets 2 et 3, les parois 5 ainsi que le système d'entraînement décrit plus haut sont entièrement recouverts par un carter de protection 18, fixé à l'arrière du dossier du siège 4, et en dessous duquel on peut prévoir, comme on le voit bien sur la figure 2, une trappe à skis 19.

A la position dite "de cloisonnement" représentée en haut de la figure 1, les bords latéraux 1c de la cloison 1 reposent sur deux parois 20 transparentes et sensiblement parallèles aux vitres latérales arrière de l'habitacle du véhicule. Ces parois latérales 20 comportent chacune un joint d'étanchéité 21 s'étendant le long de leurs arêtes opposées aux bords latéraux 1c de la cloison 1 pour permettre aux parois 20 et à la cloison 1 de coopérer de façon étanche en position de cloisonnement. Afin de pouvoir ajuster la position de la cloison 1 contre les joints d'étanchéité 11 et 21, les galets 2 et 3 servant au guidage de la cloison 1 sont montés sur des platines (non représentées) réglables respectivement dans deux plans orthogonaux, l'un de ces plans étant sensiblement parallèle au plan passant par les deux portions rectilignes 7 de la rampe 6.

Le bord supérieur 1b de la cloison 1 coopérant de façon étanche avec le joint d'étanchéité 11 du hayon est muni d'un système d'arrimage d'un écran solaire 22, qui est rétractable et commandé à distance, par exemple depuis le tableau de bord du véhicule.

Le système d'arrimage de l'écran solaire 22 comporte un support 23, fixé à l'extrémité supérieure 1b de la cloison 1 et à l'intérieur duquel coulisse un doigt 24 formant le noyau d'un électro-aimant dont le bobinage 25 est alimenté par l'intermédiaire d'un circuit imprimé 26 collé sur la cloison 1. Un ressort 27 de rappel est logé à l'intérieur du doigt 24 et sollicite ce dernier vers le fond du support 23. L'extrémité libre du doigt 24 forme un crochet 28 qui peut faire saillie à l'intérieur d'un anneau 29 solidaire de l'écran solaire 22. La base de l'anneau 29 comporte un méplat formant butée 30 qui repose, à la position de repos du système d'arrimage, contre un rebord 31, adapté pour positionner l'anneau 29 au regard du crochet 28 et formé à l'ouverture d'un boîtier enrouleur 32 contenant l'écran 22.

Il faut encore noter ici que l'écran solaire 22 est enroulé sur un tambour 33 monté pivotant à l'intérieur du boîtier enrouleur 32, qui est lui-même fixé à la partie haute du dossier du siège 4 et protégé par le carter 18 décrit précédemment. De plus, un système de rembobinage automatique (non représenté) est disposé dans le boîtier 32 et fonctionnellement relié au tambour 33.

Grâce à cet arrangement, lorsque la bobine 25 est excitée, le doigt 24 coopére avec l'anneau 29 de manière à tirer l'écran solaire 22 devant la cloison 1 au fur et à mesure que cette dernière coulisse et bascule hors du carter 18 comme il sera expliqué ultérieurement.

Il convient de préciser ici que le crochet 28 se sépare automatiquement de l'anneau 29 dès que, sous l'effet du système de rembobinage, le méplat 30 vient buter, contre le rebord 31 lorsque la cloison 1 a regagné sa position escamotée.

Le fonctionnement du dispositif de cloisonnement décrit précédemment va maintenant être expliqué plus en détail. Il convient de noter que ce dispositif peut être actionné soit automatiquement lors d'une manipulation du hayon soit à l'aide d'une commande séparée. Lors de la mise en marche du dispositif, et quelle que soit l'origine de la commande, le moto-réducteur 17 est tout d'abord actionné de manière à entraîner la crémaillère 16 et le câble 15 dans le sens des flèches visibles sur la figure 2. Durant une première partie du déplacement du câble 15, l'équerre 9 fixée à ce câble fait décrire à la cloison 1 un mouvement de translation de bas en haut le long des portions rectilignes 7 de chaque rampe 6, et ce depuis la position escamotée de la cloison 1 jusqu'à la position représentée en pointillés sur la figure 1. La cloison 1 qui est guidée entre les galets réglables 2 et 3 se dresse alors parallèlement au dossier du siège 4. Lorsque les pions 10 entrent dans les portions curvilignes 8 des rampes 6, la cloison 1 opère un basculement entre les galets 2, 3 vers l'avant de l'habitacle du véhicule. En fin de cours, les bords supérieur 1b et latéraux 1c de la cloison 1 viennent s'appuyer contre les joints d'étanchéité 11 et 21 respectivement, de façon à isoler complètement la partie de l'habitacle occupée par les passagers.

Il va de soi que la cloison 1 effectue le mouvement inverse pour regagner sa position escamotée. En d'autres termes, la cloison 1 bascule tout d'abord en s'éloignant des joints d'étanchéité 11 et 21 puis coulisse verticalement entre les galets 2 et 3 de façon à s'escamoter dans le carter de protection 18.

On a ainsi réalisé un dispositif de cloisonnement qui protège efficacement les passagers d'un véhicule à hayon contre les conditions extérieures telles que le froid, le vent et le soleil. Bien entendu, l'invention n'est nullement limitée au mode de réalisation décrit et illustré qui n'a été donné qu'à titre d'exemple.

C'est ainsi que la disposition et la forme des rampes ainsi que le système d'entraînement peuvent être quelconques et sont fonction de l'utilisation que l'on désire faire du dispositif.

## Revendications

1. Dispositif de séparation de l'habitacle d'un véhicule à hayon en au moins deux parties, à l'aide d'une cloison transversale (1) et escamotable montée entre au moins deux organes de guidage solidaires (2,3) du siège arrière (4) du véhicule, caractérisé en ce que ledit siège arrière (4) est équipé latéralement de rampes (6) ou analogues comportant chacune une portion rectiligne (7) et une portion curviligne (8) permettant respectivement la translation de la cloison (1) suivant son plan, puis le basculement de cette cloison (1) vers l'avant de l'habitacle du véhicule pour ainsi rattraper le joint d'étanchéité supérieur (11) du hayon et s'appliquer de façon étanche contre ce joint.

2. Dispositif selon la revendication 1, caractérisé en ce que les bords latéraux (1c) de la cloison (1) coopèrent de façon étanche avec des éléments de garnissage de l'habitacle, tels que par exemple des parois (20) transparentes et sensiblement parallèles aux vitres latérales arrière de cet habitacle.

3. Dispositif selon la revendication 1 ou 2, caractérisé en ce que le bord supérieur (1b) de la cloison (1) coopèrant de façon étanche avec le joint d'étanchéité (11) supérieur du hayon est muni d'un doigt (24, 28) ou analogue, actionnable par un électro-aimant et susceptible de coopérer avec un anneau (29) arrimé à un écran solaire (22) rétractable.

4. Dispositif selon l'une des revendications 1 à 3, caractérisé en ce que l'écran solaire précité (22) est enroulable sur un tambour (33) ou analogue situé tout comme les deux organes de guidage précités (2, 3) en partie extrême haute du dossier du siège arrière (4).

5. Dispositif selon l'une des revendications précédentes, caractérisé en ce que les organes de guidage précités (2, 3) forment au moins une paire de galets (2, 3) montés sur des supports réglables respectivement dans deux plans sensiblement orthogonaux.

## Patentansprüche

1. Vorrichtung zur Trennung des Fahrgastraumes eines Kraftfahrzeugs mit Rückwandtür in wenigstens zwei Teilen mit Hilfe einer zwischen wenigstens zwei mit dem Rücksitz (4) des Fahrzeugs fest verbundenen Führungsgliedern (2, 3) angeordneten einklappbaren Quertrennwand (1), dadurch gekennzeichnet, dass der besagte Rücksitz (4) mit jeweils einen geradlinigen Abschnitt (7) und einen krummlinigen Abschnitt (8) aufweisenden Rampen (6) oder dergleichen seitwärts ausgestattet ist, welche Abschnitte jeweils die Translationsbewegung der Trennwand (1) entlang ihrer Ebene und dann das Kippen dieser Trennwand (1) nach vorne des Fahrgastraumes des Fahrzeugs gestatten, um somit die obere Dichtung (11) der Rückwandtür zu erreichen und sich in abdichtender Weise gegen diese Dichtung anzulegen.

2. Vorrichtung nach Anspruch 1, dadurch gekennzeichnet, dass die Seitenränder (1c) der Trennwand (1) in abdichtender Weise mit Ausstattungselementen des Fahrgastraumes, wie zum Beispiel durchsichtigen Wänden (20), die etwa parallel zu den hinteren Seitenfensterscheiben dieses Fahrgastraumes sind, zusammenzuwirken.

3. Vorrichtung nach Anspruch 1 oder 2, dadurch gekennzeichnet, dass der in abdichtender Weise mit der oberen Dichtung (11) der Rückwandtür (11) zusammenwirkende obere Rand (1b) der Trennwand (1) mit einem durch einen Elektromagnet betätigbaren Finger (24, 28) oder dergleichen, der fähig ist, mit einem an einem einziehbaren Sonnenblendschirm (22) angebrachten (29) Ring zusammenzuwirken, versehen ist.

4. Vorrichtung nach einem der Ansprüche 1 bis 3, dadurch gekennzeichnet, dass der vorgenannte Sonnenblendschirm (22) auf einer Trommel (33) oder dergleichen aufwickelbar ist, die ganz wie die beiden vorgenannten Führungsglieder (2, 3) am oberen Endteil der Lehne des Rücksitzes (4) gelegen ist.

5. Vorrichtung nach einem der vorangehenden Ansprüche, dadurch gekennzeichnet, dass die vorgenannten Führungsglieder (2, 3) wenigstens ein Paar jeweils in zwei etwa orthogonalen Ebenen einstellbaren Haltern angeordneter Rollen (2, 3) bilden.

## Claims

1. Device for the separation of the passenger space of a vehicle with a tailgate back door into at least two parts with the assistance of a transverse and retractable partition (1) mounted between at least two guide members (2, 3) made fast to the rear seat (4) of the vehicle, characterized in that the said rear seat (4) is fitted sidewise with ramps (6) or the like comprising each one a rectilinear portion (7) and a curvilinear portion (8) respectively permitting the translatory motion of the partition (1) along its plane and then the tilting of that partition (1) forwards of the passenger space of the vehicle to thus meet the upper sealing joint (11) of the back door and to be applied in fluid-tight fashion against this joint.

2. Device according to claim 1, characterized in that the side edges (1c) of the partition (1) co-operate in a fluid-tight manner with fitting elements of the passenger space such for example as transparent walls (20) substantially parallel to the back side window panes of this passenger space.

3. Device according to claim 1 or 2, characterized in that the upper edge (1b) of the partition (1) co-operating in a fluid-tight manner with the upper sealing joint (11) of the back door is provided with a finger (24, 28) or the like actuatable by an electromagnet and capable of co-operating with a ring (29) attached to a retractable sun visor shield (22).

4. Device according to one of claims 1 to 3, characterized in that the aforesaid sun visor shield (22) may be wound upon a drum (33) or the like located quite like both aforesaid guide members (2, 3) at the upper end portion of the back of the rear seat (4).

5. Device according to one of the foregoing claims, characterized in that the aforesaid guide members (2, 3) form at least one pair of rollers (2, 3) mounted on adjustable supports in two substantially orthogonal plans, respectively.
